# EUROPÄISCHE PATENTSCHRIFT

(11) **EP 1 438 549 B1**
(45) Veröffentlichungstag und Bekanntmachung des Hinweises auf die Patenterteilung: **09.06.2010**
(21) Anmeldenummer: 02772024.2
(22) Anmeldetag: 14.08.2002
(51) Int. Cl.: G01C 3/06, G01C 3/02

(54) **VORRICHTUNG ZUR ENTFERNUNGSMESSUNG**
DEVICE FOR DISTANCE MEASUREMENT
DISPOSITIF DE MESURE DES DISTANCES

(30) Priorität: 05.10.2001 DE 10149144
(43) Veröffentlichungstag der Anmeldung: 21.07.2004
(73) Patentinhaber: ROBERT BOSCH GMBH, 70442 Stuttgart (DE)
(72) Erfinder: STIERLE, Joerg, 71111 Waldenbuch (DE); WOLF, Peter, 70771 Leinfelden-Echterdingen (DE)
(86) Internationale Anmeldenummer: PCT/DE2002/002974
(87) Internationale Veröffentlichungsnummer: WO 2003/031911

(56) Entgegenhaltungen:
- US-A- 5 930 904
- US-B1- 6 226 076
- US-B1- 6 324 888

## Beschreibung

Die vorliegende Erfindung geht aus von einer Vorrichtung zur Entfernungsmessung nach dem Oberbegriff des unabhängigen Anspruchs.

### Stand der Technik

Entfernungsmessgeräte als solche sind seit geraumer Zeit bekannt. Diese Geräte senden einen modulierten Messstrahl, beispielsweise einen Lichtstrahl oder einen Ultraschallstrahl aus, der auf ein gewünschtes Zielobjekt beziehungsweise eine Zielfläche, deren Abstand zum Gerät zu ermitteln ist, ausgerichtet wird. Das von der angepeilten Zielfläche reflektierte oder gestreute, rücklaufende Messsignal wird von dem Gerät teilweise wieder detektiert, und zur Ermittlung des gesuchten Abstandes verwendet.

Der Anwendungsbereich derartiger Entfernungsmessgeräte umfasst im allgemeinen Entfernungen im Bereich von einigen Zentimetern bis zu mehreren hundert Metern. Entsprechende Messgeräte werden mittlerweile in kompakter Ausführung kommerziell vertrieben und erlauben dem Anwender einen einfachen, handgehaltenen Betrieb. Die Geräte lassen sich darüber hinaus mit beispielsweise als Zubehör vertriebenen Stativen oder Halterungen aber auch auf einen statischen Messprozess umrüsten, was insbesondere für ein sehr exaktes Messen oder die Messung sehr großer Zielobjektabstände von Vorteil ist.

Speziell für die Bestimmung sehr kurzer Distanzen ist es notwendig, dem Messgerät einen eindeutigen Bezugspunkt (Referenzpunkt) beziehungsweise eine Bezugsebene zuzuordnen, von dem aus die Distanz des Messgerätes zum gewünschten Zielobjekt errechnet wird. Bei bekannten, auf dem Markt befindlichen Entfernungsmessgeräten liegt dieser Bezugspunkt beispielsweise in einer senkrecht zur Strahlrichtung verlaufenden Gehäusekante, wie beispielsweise der Gehäusevorderseite oder dem hinteren Ende des Gerätes. Der Anwender hat dafür zu sorgen, dass das Messgerät beim Messprozess so ausgerichtet wird, dass der Bezugspunkt respektive die Bezugsebene des Messgerätes genau mit dem Nullpunkt der von ihm zu ermittelnden Strecke zusammenfällt.

Aus der WO 94/27164 und der Gebrauchsanleitung "Disto" der Firma Leica Geosystems AG, 9435 Heerbrugg, Schweiz, 1994, ist ein optoelektronisches Handmessgerät zur Entfernungsmessung bekannt, mit dem Entfernungen zu einem Objekt optisch gemessen werden können. Dabei kann die Entfernung zu dem Objekt entweder von einem vorderen oder einem hinteren Messanschlag des Entfernungsmessgerätes aus gemessen werden. Als Messanschläge (Referenzpunkte des Gerätes) dienen im Allgemeinen die vorderen und hinteren Gehäuseflächen des Entfernüngsmessgerätes, die in einem rechten Winkel zur Messrichtung ausgebildet sind. Den beiden möglichen Messanschlägen, das heisst den beiden geräteinternen Referenzpunkten ist jeweils eine separate Messtaste auf dem Tastenfeld des Messgerätes zugeordnet, bei deren Betätigung eine Entfernungsmessung mit dem, der betätigten Taste zugeordneten Bezugspunkt ausgelöst und der Entfernungsmesswert auf einem Display des Gerätes anschließend angezeigt wird.

Aus der DE 31 22 483 A1 ist ein Handgerät zur Distanzmessung und Koordinatenfeststellung bei geodätischen Messungen bekannt, das zwecks Schaffung eines einfachen und leichten Handgerätes für Nahmessungen unter Anderem in einer zur Messrichtung senkrechten Ebene einen an das Distanzmessgerät anbringbaren, einstellbaren Ständer aufweist. Der in der Höhe verstellbare Ständer der DE 31 22 483 A1 hat eine doppelte Aufgabe. Er gewährleistet zum Einen ein zitterfreies Halten des Messgerätes in der Hand sowie zum Anderen die Zentrierung des Distanzmessers auf einen Referenzpunkt am Boden. Das offenbarte Entfernungsmessgerät muss mit seinem Ständer, in den Nullpunkt (Referenzpunkt) der zu messenden Strecke gesetzt werden.

Bei einer zweckmäßiger Ausführung des Gerätes der DE 31 22 483 A1 ist der Ständer an den Distanzmesser lösbar angeschlossen und besitzt zudem zwecks Kontrolle seiner senkrechten Stellung eine Büchsenlibelle.

Aus der DE 198 09 683 A1 ist ein Zusatzgehäuse zur Halterung eines an sich handgehaltenen Entfernungsmessgerätes bekannt, das als Hohlkörper ausgebildet ist und eine Einführöffnung zum Einsetzen eines Entfernungsmessgerätes aufweist. Das Zusatzgehäuse ist mit einer Gewindebuchse zur Befestigung des Aufnahmegehäuses an einem Stativ versehen. Die Längsachse der Gewindebuchse für die Stativhalterung fluchtet mit einer als Bezugsebene dienenden Anlagefläche des Entfernungsmessgerätes, wenn dieses ordnungsgemäß in das Zusatzgehäuse eingesetzt ist. Auf diese Weise ist der Referenzpunkt für eine Entfernungsmessung mit Hilfe des Stativs gleich dem Referenzpunkt des handgehaltenen Entfernungsmessgerätes. Ein Wechseln der Bezugspunkte durch den Anwender ist nicht notwendig.

Auch bei dem in der DE 198 09 683 A1 offenbarten Entfernungsmessgerät muss der Anwender darauf achten, dass die geräteinterne Bezugsebene mit dem Nullpunkt der von ihm zu messenden Strecke übereinstimmt. Ferner führt ein nicht vollständig in die Halterung eingeführtes Messgerät im Fall der DE 198 09 683 A1 zu einer fehlerhaften Längenmessung, da von einem falschen Nullpunkt (Referenzpunkt) der gemessenen Strecke ausgegangen wird.

### Vorteile der Erfindung

Im Gegensatz zu den Geräten des Standes der Technik hat die erfindungsgemäße Vorrichtung den Vorteil, dass der Wechsel des Referenzpunktes beziehungsweise der Referenzebene für die zu messende Entfernung, bei Verwendung einer mechanischen Halterung, automatisch der Auswerteeinheit des Messgerätes übermittelt wird. Ein Umschalten der zu berücksichtigenden Bezugsebene durch den Anwender, welches bei einem Versäumnis zwangsläufig zu Messfehlern führt, ist in der erfindungsgemäßen Vorrichtung nicht mehr notwendig. In vorteilhafter Weise erkennt das Messgerät von selbst, welche Bezugsebene zur Anwendung kommen soll. Dem Anwender verbleibt lediglich, das Messgerät in geeigneter Weise auszurichten.

Die im Messgerät vorgesehenen Mittel zur Detektion einer eingesetzten Halterung für das Gehäuses, wie es beispielsweise ein Stativ, ein mechanischer Bauteiladapter oder eine Messgeräteaufnahme darstellen, umfassen zumindest einen Detektor und mindestens ein Schaltmittel. Der Detektor registriert, ob beispielsweise ein Stativ eingeschraubt ist oder ob der Entfernungsmesser über einen Adapter an ein weiteres Bauteil angekoppelt ist, und somit eine statische, das heisst nicht handgehaltene Messung unter Verwendung einer mechanischen Halterung bevorsteht. Ein entsprechendes Schaltsignal wird von einem Schaltmittel, das beispielsweise ein Schalter sein kann, an die Auswerteeinheit des Messgerätes übermittelt, die den neuen Referenzpunkt des Messgerätes für die Entfernungsmessung registriert und nach erfolgter Messung den Abstand des Zielobjektes zu diesem neuen Referenzpunkt des Gerätes errechnet.

In einer ersten, vorteilhaften Ausführungsform der erfindungsgemäßen Vorrichtung ist der Detektor und das Schaltmittel in einem mechanischen Schalter integriert. Wird der Entfernungsmesser mit seinem in das Gehäuse integrierten Aufnahmegewinde beispielsweise auf ein Stativ oder einen Bauteiladapter geschraubt, so betätigt ein mechanischer Stößel, welcher durch das Einschrauben eines Gewindebolzens des Stativs beziehungsweise des Adapters nach innen in das Gerät verschoben wird, einen mechanischen Schalter des Gerätes. Dieser Schalter schließt beispielsweise einen Stromkreis, so dass ein entsprechendes Signal über das Vorliegen des geänderten Referenzpunktes an die Auswerteeinheit weitergeleitet werden kann.

In einer weiteren, vorteilhaften Ausführungsform der erfindungsgemäßen Vorrichtung wird ein metallischer Gewindebolzen verwendet. Das Gehäuse des erfindungsgemäßen Entfernungsmessgerätes besitzt dann beispielsweise eine zweigeteilte, metallische Gewindebuchse. Jede der beiden Hälften der Gewindebuchse ist mit einem entsprechenden elektronischen Schaltkreis des Entfernungsmessers verbunden. Durch das Einschrauben des metallischen Gewindebolzens werden die beiden Gewindebuchsenteile elektrisch leitend miteinander verbunden, so dass ein Stromkreis geschlossen wird. Das so erzeugte Signal wird an die Auswerteeinheit übermittelt und, wie bereits oben beschrieben, ausgewertet.

Eine weitere vorteilhafte Ausführungsform des beanspruchten, erfindungsgemäßen Entfernungsmessgerätes sieht vor, dass bei einer beispielsweise als Innengewinde ausgelegten Halterungsaufnahme, welche in Kunststoff realisiert ist, das Einschrauben eines zur Halterung gehörenden Gewindebolzens kapazitiv zu erfassen. Ein entsprechender Detektor registriert die bei einer eingeschraubten Halterung geänderte Kapazität und übermittelt diese Information entsprechend an die Auswerteeinheit.

Auch ein magnetischer Detektor, wie beispielsweise ein Hallsensor, kann in vorteilhafter Weise in der erfindungsgemäßen Vorrichtung zur Detektion einer eingeschraubten Halterung genutzt werden.

In einer besonders vorteilhaften Ausführungsform der erfindungsgemäßen Vorrichtung wird der bei einer Messung zur Anwendung kommende Referenzpunkt jeweils in einer Anzeige des Messgerätes, für den Anwender erkennbar, wiedergegeben. Somit wird dem Anwender direkt übermittelt, von welchem Referenzpunkt aus die momentane Messung gerade durchgeführt wurde. Fehlmessungen durch ein falsches Setzen der Bezugskante (Referenzebene) sind somit weitgehend ausgeschlossen. Das Gerät zeichnet sich damit durch eine einfache, Anwender orientierte Bedienung aus.

Die erfindungsgemäße Vorrichtung zur Entfernungsmessung lässt sich beispielsweise in Form eines Laserentfernungsmessgerätes realisieren. Solche Laserentfernungsmessgeräte werden zur Erzielung eines exakten Messwertes, speziell bei großen Zielobjektentfernungen, häufig im Stativbetrieb benutzt. In vorteilhafter Weise ermöglicht die erfindungsgemäße Ausführungsform eines Laserentfernungsmessgerätes ein einfaches Messen ohne Umschaltung der Bezugskante für unterschiedliche Messaufgaben.

Weitere Vorteile der erfindungsgemäßen Vorrichtung ergeben sich aus den Zeichnungen und der zugehörigen Beschreibung.

### Zeichnung

Ausführungsbeispiele der erfindungsgemäßen Vorrichtung sind in der Zeichnung dargestellt und in der nachfolgenden Beschreibung näher erläutert. In der Zeichnung sind die Ausführungsbeispiele der Vorrichtung in vereinfachter, schematischer Weise dargestellt. Die Beschreibung, die Figuren und die Ansprüche enthalten zahlreiche Merkmale in Kombination. Ein Fachmann wird diese Merkmale auch einzeln betrachten und zu weiteren, sinnvollen Kombinationen zusammenfassen.

Es zeigen:
Figur 1 einen schematischen Messaufbau bei Verwendung eines Stativs für ein Ausführungsbeispiel der erfindungsgemäßen Vorrichtung,
Figur 2 ein erfindungsgemäßes Laserentfernungsmessgerät, schräg von oben bei der Montage auf ein Stativ,
Figur 3 das Laserentfernungsmessgerät aus Figur 2, schräg von unten,
Figur 4 das Laserentfernungsmessgerät aus Figur 2 und Figur 3, direkt von unten,
Figur 5 in einer Detailansicht eines weiteren Ausführungsbeispiels eines erfindungsgemäßen Entfernungsmessgerätes die Gehäuseunterseite im Bereich einer Halterungsaufnahme.

### Beschreibung der Ausführungsbeispiele

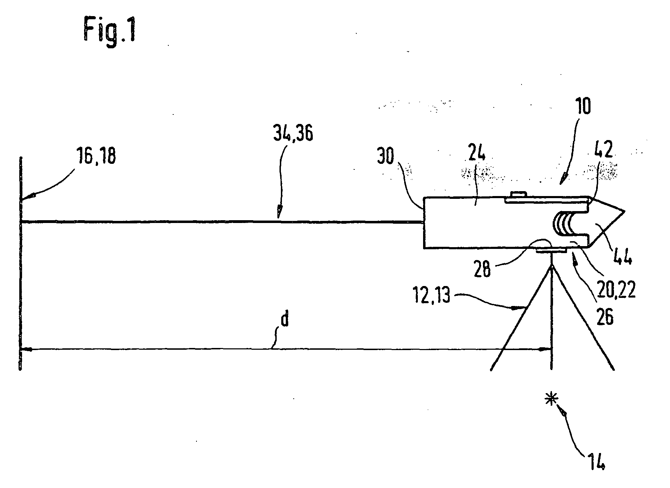

Figur 1 zeigt in vereinfachter, schematischer Darstellung einen typischen Messaufbau für die Entfernungsmessung mit einer erfindungsgemäßen Vorrichtung 10 bei Verwendung eines Stativs 12 als mechanische Halterung 13 für die Vorrichtung 10. Bei solch einer Messung soll die Entfernung d eines Referenzpunktes 14 zu einem Zielobjekt 16, welches in Figur 1 vereinfachend in Form einer Zielfläche 18 dargestellt ist, bestimmt werden.

Zu diesem Zweck ist ein Entfernungsmessgerät 20, das in Ausführungsbeispiel der Figur 1 in der Form eines Laserentfernungsmessers 22 vorliegt, mit seinem Gehäuse 24, auf einem Stativ 12 angeordnet. Das Laserentfernungsmessgerät 22 besitzt auf einer Gehäuseunterseite 26 eine Aufnahme 28 für das Stativ 12. Das Entfernungsmessgerät 20 kann beispielsweise auf das Stativ 12 aufgeschraubt sein, oder durch eine entsprechende Steckverbindung reversibel mit dem Stativ 12 verbunden sein. Weitere, dem Fachmann bekannte Verbindungsarten sind ebenfalls möglich. Das Entfernungmessgerät 20 wird mit seinem Stativ 12 durch eine bekannte Methode, auf den Referenzpunkt 14 ausgerichtet.

Aus einer Gehäusevorderseite 30 der erfindungsgemäßen Vorrichtung 10 tritt zur Messung ein, von einer nicht weiter dargestellten Sendeeinheit 32 erzeugter, modulierter Laserstrahl 34 als Messsignal 36 aus dem Gehäuse 24 aus. Dieser Laserstrahl 34 wird vom Zielobjekt 16 zum Teil reflektiert und tritt über ein Kollimationsoptik wieder in das Gehäuse 24 des Entfernungsmessgerätes 20 ein, wo er in einer Empfangseinheit 38 detektiert wird und die vom Licht 34 zurückgelegte Strecke beispielsweise aus der Laufzeit des Lichtes oder einer entsprechenden Phasenverschiebung des Messsignals 36 bestimmt wird.

Bei handgehaltenen Entfernungsmessgeräten, wie sie beispielsweise beim Innenausbau von Gebäuden verwendet werden, wird die gesuchte Strecke zum Zielobjekt zumeist von einer Gehäusekante des Gerätes aus berechnet. Dazu wird beispielsweise der Nullpunkt einer zu messenden Strecke, das heisst, der Referenzpunkt 14 der Messung werksseitig mit einer Gehäusevorderseite 30 oder auch mit einer Gehäuserückseitenkante 42 gleichgesetzt und die vom Messsignal zurückgelegte Strecke von diesem geräteinternen Referenzpunkt aus errechnet. Zur Erzeugung eines definierten Bezugspunktes kann auch eine Anlageklappe 44 im Gerät 20 vorhanden sein, die sich ausfahren lässt und somit einen deutlich sichtbaren Referenzpunkt für die Messung liefert.

Im allgemeinen Fall liegt daher der Nullpunkt der Streckenmessung bei Verwendung eines Stativs nicht im Nullpunkt des Messgerätes für den handgehaltenen Betrieb. Die sich ergebende Differenz der beiden entsprechend ermittelten Messstrecken muss vom Anwender selbständig herausgerechnet werden, beziehungsweise muss der Messaufbau durch den Anwender entsprechend korrigiert werden.

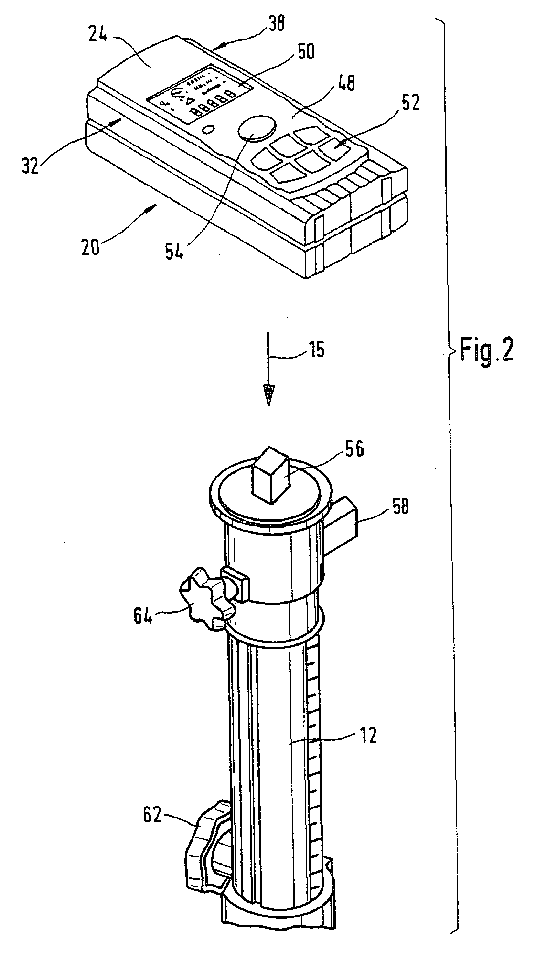

Figur 2 zeigt ein Ausführungsbeispiel eines Entfernungsmessgerätes 20 beim Aufsetzen auf ein Stativ 12. Das Messgerät 20 ist mit einer im Gehäuse 24 angeordneten Sendeeinheit 32 zum Aussenden eines Messsignals 36 versehen. Die Sendeeinheit 32 kann beispielsweise eine nicht näher dargestellte Laserdiode nebst einer Kollimationslinse sein, mit deren Hilfe das Messsignal gebündelt wird. Ferner weist das Entfernungsmessgerät 20 eine Empfangseinheit 38 mit einer nicht näher dargestellten Linse auf, die das am Zielobjekt reflektierte oder auch gestreute, rücklaufende Messsignal 36 einfängt und beispielsweise zu einem optoelektrischen Wandler lenkt. Der Wandler, der beispielsweise als Fotodiode, insbesondere als eine Avalanche-Photodiode, ausgebildet sein kann, empfängt die reflektierten Messsignalanteile und führt sie als elektrisches Signal einer ebenfalls nicht näher dargestellten Auswerteeinheit 46 des Messgerätes 20 zu. Die von der Auswerteeinheit 46 des Messgerätes 20 ermittelte Distanz wird anschließend für einen Anwender sichtbar auf einer Anzeigevorrichtung 50 dargestellt.

Auf einer Oberseite 48 des Gehäuses 24 des Entfernungsmessgerätes 20 befindet sich unter anderem die Anzeigevorrichtung 50 sowie mehrere Bedientasten 52 für das Messgerät 20, mit denen sich beispielsweise unterschiedliche Messmodi einstellen lassen. Der eigentliche Messvorgang für die Entfernungsmessung wird durch eine separate Starttaste 54 ausgelöst.

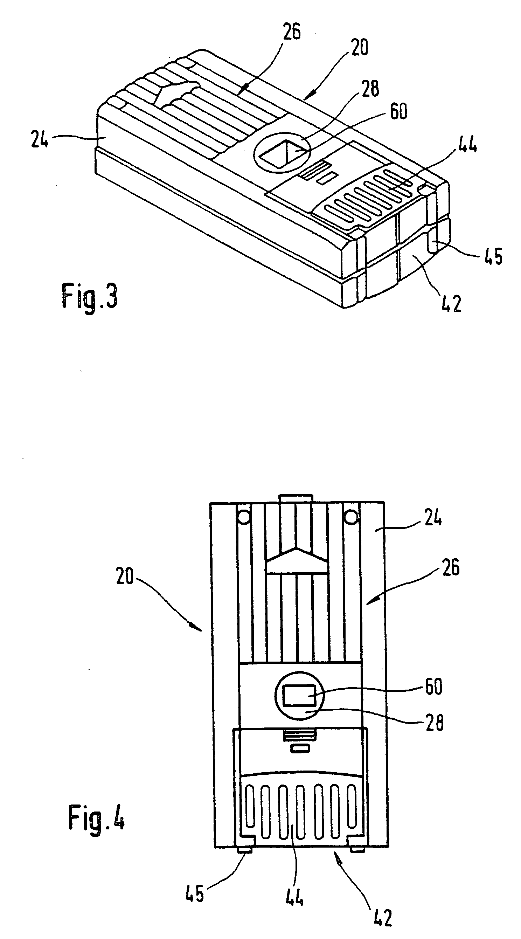

Ebenfalls dargestellt in Figur 2 ist der obere Teil eines Stativs 12, das als mechanische Halterung 13 für das Messgerät dient und auf dass das Entfernungsmessgerät 20 in Richtung des Pfeils 15 aufgesetzt werden kann. In der in Figur 2 dargestellten Ausführungsform der erfindungsgemäßen Vorrichtung weist das Stativ 12 zwei kubische Bolzen 56 und 58 auf, mit denen das Messgerät 20 alternativ verbunden werden kann. In der Unterseite 26 des Gehäuses 24 des Entfernungsmessers 20 ist dazu eine entsprechende Aufnahme 28 mit einer rechteckigen Ausnehmung 60 für den einen Verbindungsbolzen 56 beziehungsweise den zweiten Bolzen 58 ausgebildet, wie sich in den Darstellungen der Figuren 3 und 4 deutlich erkennen lässt. In anderen Ausführungsformen können zur Befestigung und Kontaktierung auch andere, dem Fachmann bekannte, Verbindungsmethoden genutzt werden, wie beispielsweise Mehrkantbolzen beziehungsweise Aufnahmen oder auch entsprechende Gewindepassungen.

In Figur 3 und Figur 4 ist die Unterseite 26 des Gehäuses 24 der erfindungsgemäßen Vorrichtung 10 in zwei unterschiedlichen Perspektiven dargestellt. Figur 3 zeigt das Laserentfernungsmessgerät von unten in schräger, perspektivischer Ansicht, während Figur 4 das Laserentfernungsmessgerät aus Figur 2 und Figur 3 zur Verdeutlichung noch einmal direkt von unten wiedergibt.

Die Aufnahme 28 für eine mechanische Halterung 13 des Messgerätes 20 ist drehbar in die Gehäuseunterseite 26 eingelassen. Ferner weist die Gehäuseunterseite 26 im Bereich der Kante der Gehäuserückseite 42 eine Anlageklappe 44 auf, die im handgehaltenen Betrieb des Messgerätes 20 herausgeklappt werden kann um ein präzises Anlegen des Messgerätes 20 an eine externe Bezugskante zu ermöglichen. Zu dem gleichen Zweck sind auf der Gehäuserückseite 42 Anlageprofile 45 vorgesehen, die die gehäuseinterne Referenzebene des Gerätes 20 markieren.

Über eine erste Schraube 62 kann die Höhe des in Figur 2 im Ausschnitt dargestellten Stativs 12 und damit auch die Höhe eines auf das Stativ 12 aufgesetzten Messgerätes 20 wunschgemäß eingestellt werden. Eine zweite Schraube 64 gestattet es, den Bolzen 56 und insbesondere den Bolzen 58 der Stativeinheit 12 in einer horizontalen Ebene zu schwenken und in der gewünschten Position festzustellen. Auf diese Art ist es leicht möglich, dass auf den Bolzen 56 beziehungsweise 58 aufgesetzte Messgerät 20 in gewünschter Weise auf ein Zielobjekt auszurichten.
Die Stativaufnahme 28 ist zudem im Gehäuse 24 des Messgerätes 20 um eine Achse drehbar gelagert. Das Entfernungsmessgerät 20 kann somit auf dem Bolzen 56 in einer horizontalen Ebene um 360° gedreht werden. Wird das Messgerät 20 alternativerweise auf den Bolzen 58 aufgesetzt, so lässt sich das Gerät um 360° in einer vertikalen Ebene verschwenken. Das Gehäuse 24 kann zusätzlich einen nicht näher beschriebenen Winkelsensor aufweisen, der mit der Aufnahme 28 verbunden ist und über den ein entsprechender Schwenkwinkel der Aufnahme 28 des Entfernungsmessgerätes 20 detektierbar ist.

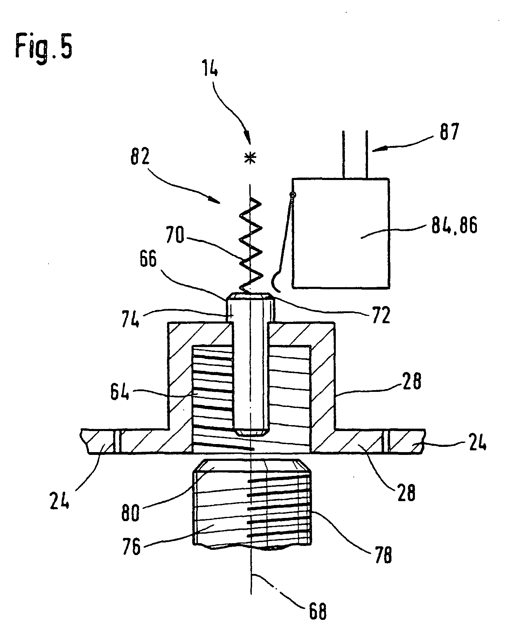

Figur 5 zeigt eine Detailansicht einer alternativen Ausführungsform der erfindungsgemäßen Vorrichtung. Dargestellt ist lediglich der Bereich einer Halterungsaufnahme 28 eines Gehäuses 24 eines entsprechenden Messgerätes 20 in einer Seitenansicht. Funktionsgleiche Bauteile sind der Übersicht halber in Figur 5 mit den gleichen Bezugszeichen wie in den vorhergehenden Figuren versehen worden.

Die Aufnahme 28 der erfindungsgemäßen Vorrichtung 10 nach dem Ausführungsbeispiel der Figur 5 weist ein Innengewinde 64 auf. Zudem befindet sich in der Halterungsaufnahme 28 ein bewegbarer Stößel 66, der in Richtung der vertikalen Achse 68 verschiebbar ist. Der Stößel 66 wird durch ein Federelement 70, das sich innerhalb des Gehäuses 24 des Messgerätes 20 befindet und auf das gehäuseinnere Ende 72 des Stößels 66 einwirkt, in die Aufnahme 28 gedrückt. Ein Sicherungsmechanismus 74 sicher den Stößel 66 gegen ein Herausfallen aus dem Gehäuse 24 ab.

Die mechanische Halterung 13 zur Aufnahme des Messgerätes, die im Einzelnen nicht dargestellt ist, ist mit einem entsprechende Gewindebolzen 76 versehen, welcher ein Aussengewinde 78 ausweist, auf das das Gehäuse 24 des Messgerätes 20 aufgeschraubt werden kann. Beim Aufschrauben des Messgerätes 20 auf den Gewindebolzen 76 der Halterung 13 wird der Stößel 66 durch eine Stirnfläche 80 des Gewindebolzens 76, entgegen der Federkraft des Federelementes 70, in das Gehäuseinnere 82 des Messgerätes 20 gedrückt. Im Gehäuseinneren 82 befindet sich ein Schaltelement 84, das im dargestellten Ausführungsbeispiel als einfacher Schalter 86 schematisiert ist. Durch die Verschiebung des Stößels 66 in das Gehäuseinnere 82 hinein wird der Schalter 86 betätigt und ein nicht weiter dargestellter Stromkreis 87 geschlossen.

Auf diese Weise wird ein Signal in der Elektronik des Messgerätes 20 erzeugt, das der Auswerteeinheit 46 der erfindungsgemäßen Vorrichtung 10 signalisiert, dass eine Halterung 13 zur Verwendung kommt und der Referenzpunkt 14 für die Entfernungsmessung (Nullpunkt für die zu bestimmende Strecke) in die Achse 68 der Halterung 13 zu verlegen ist. So kann bei Entfernungsmessungen unter Zuhilfenahme eines Halterung beziehungsweise eines Stativs automatisch die Referenzebene beziehungsweise der Referenzpunkt des Messgerätes umgeschaltet werden, ohne dass der Anwender, beispielsweise durch Betätigen einer Taste des Bedienfeldes des Messgerätes, aktiv werden muss.

Die erfindungsgemäße Vorrichtung ist nicht auf die in den Beispielen beschriebenen Ausführungsformen begrenzt.

So ist die erfindungsgemäße Vorrichtung nicht auf die Verwendung eines Stativs begrenzt. Es können beispielsweise in weiteren, nicht dargestellten, vorteilhaften Ausführungsformen der Erfindung auch andere der Befestigung des Messgerätes dienende Halterungen verwendet werden, bei deren Benutzung ein entsprechender Detektor beziehungsweise ein Schaltelement ein Signal generiert, dass der Auswerteeinheit signalisiert, dass der Referenzpunkt für die Abstandsmessung umgeschaltet werden muss. So ist beispielsweise die Verwendung von einer Wandhalterung oder auch der Einsatz von Adaptern für die mechanischen Verbindung der erfindungsgemäßen Vorrichtung mit weiteren Messgeräten, Maschinen oder auch Fahrzeugen in analoger Weise möglich.

Die erfindungsgemäße Vorrichtung ist nicht auf die Verwendung eines mechanischen Schalters als Schaltelement beschränkt.

In einer weiteren, nicht explizit dargestellten Ausführungsform der erfindungsgemäßen Vorrichtung, kann die Stativaufnahme 28 oder die entsprechende Aufnahme für eine anders geartete Halterung beispielsweise mit einen Magnetsensor, etwa in Form eines Hallsensors im oder am Gerät, versehen sein, um eine eingesetzte Halterung für das Messgerät zu detektieren.

Auch ist beispielsweise als weitere Ausführungsform eine zweigeteilte, metallische Gewindebuchse möglich, die im Gehäuse des Messgerätes integriert ist. Jede der beiden Hälften der Gewindebuchse ist mit einem elektronischen Schaltkreis des Entfernungsmessgerätes verbunden. Durch Einschrauben eines metallischen Stativgewindebolzens werden die beiden Gewindebuchsen im Gehäuse des Messgerätes elektrisch leitend miteinander verbunden. Dies kann in einer elektronischen Schaltung detektiert werden, und der Auswerteeinheit des Messgerätes übermittelt werden.

Ebenso ist vorstellbar und gedacht, dass das Einschrauben oder Einführen eines Halterungsbolzens für das Messgerät kapazitiv erfasst wird und an eine entsprechende, elektronische Schaltung weitergeleitet wird. In diesem Falle ließen sich auch in vorteilhafter Weise nichtmetallische beziehungsweise nichtmagnetische Verbindungsmittel detektieren.

Wird der erfindungsgemäße Entfernungsmesser mit seinem in das Gehäuse integrierten Verbindungsmitteln beispielsweise auf ein Stativ geschraubt, so wird dies durch eine elektronische Schaltung erkannt und darüber hinaus bei dem im Anzeigefeld des Messgerätes angezeigten Messwert berücksichtigt. So ist es in einer weiteren Ausführungsform der erfindungsgemäßen Vorrichtung auch möglich, eine entsprechende Anzeige der gerade aktiven Bezugskante, also beispielsweise einer Stativachse oder der Gehäusevorderseite, im Anzeigefeld des erfindungsgemäßen Messgerätes zu symbolisieren. Der Anwender weiß in diesem Fall, von welchem Referenzpunkt aus die gemessene Strecke errechnet worden ist, so dass eine Rückversicherung jederzeit leicht möglich ist.

Die erfindungsgemäße Vorrichtung lässt sich beispielsweise bei im Prinzip handgehaltene Laserentfernungsmessgeräte nutzen, bei denen gelegentlich auch ein Stativbetrieb, also die statische Messung von einem Stativ oder einer anderen mechanischen Halterung des Gerätes, zur Anwendung kommt.

Darüber hinaus ist die erfindungsgemäße Vorrichtung nicht auf die Verwendung in Laserentfernungsmessern beschränkt, vielmehr lässt sich diese unter Anderem auch für Ultraschallmessgeräte oder andere, eine Weglänge ermittelnde Messgeräte einsetzen.

## Patentansprüche

1. Vorrichtung (10) zur Entfernungsmessung, mit einem Gehäuse (24) und einer in dem Gehäuse (24) untergebrachten Sendeeinheit (32) für ein Messsignal (34,36) sowie einer Empfangseinheit (38) für das von einem Zielobjekt (16,18) rücklaufende Messsignal, mit einer Auswerteeinheit (46) zur Bestimmung einer Entfernung (d) mindestens eines Referenzpunktes (14) des Gehäuses (24) zum Zielobjekt (16,18) und einer, diese Entfernung (d) wiedergebenden Anzeigevorrichtung (50) sowie mit mindestens einer mit dem Gehäuse (24) verbundenen Aufnahme (28) für eine Halterung (12,13) der Vorrichtung (10), **dadurch gekennzeichnet, dass** im oder am Gehäuse (24) der Vorrichtung (10) Mittel (66,84,86) vorgesehen sind, die eine eingesetzte Halterung (12,13) detektieren und den bei einer Messung unter Zuhilfenahme der Halterung (12,13) zur Anwendung kommenden Referenzpunkt (14) der Entfernungsmessung automatisch der Auswerteeinheit (46) übermitteln.

2. Vorrichtung nach Anspruch 1, **dadurch gekennzeichnet, dass** die Mittel (66,84,86) einen Detektor (66) und mindestens ein Schaltmittel (84,86) aufweisen.

3. Vorrichtung nach Anspruch 2, **dadurch gekennzeichnet, dass** das mindestens eine Schaltmittel (84,86) und/oder der Detektor (66) ein mechanischer Schalter (86) ist.

4. Vorrichtung nach Anspruch 2, **dadurch gekennzeichnet, dass** das Schaltmittel (84,86) und/oder der Detektor (66) ein elektrischer Kontakt ist.

5. Vorrichtung nach Anspruch 2, **dadurch gekennzeichnet, dass** ein kapazitiver Detektor in die Vorrichtung (10) integriert ist.

6. Vorrichtung nach Anspruch 2, **dadurch gekennzeichnet, dass** der Detektor ein ein Magnetfeld detektierender Hall-Sensor ist.

7. Vorrichtung nach einem der vorhergehenden Ansprüche, **dadurch gekennzeichnet, dass** der von der Auswerteeinheit(46) detektierte Bezugspunkt (14) in der Anzeigevorrichtung (50) des Gerätes (20) angezeigt wird.

8. Vorrichtung nach einem der vorhergehenden Ansprüche, **dadurch gekennzeichnet, dass** das Messsignal (36) zur Entfernungsmessung ein optisches Signal, insbesondere ein Laserstrahl (34) ist.

9. Vorrichtung nach einem der vorhergehenden Ansprüche, **dadurch gekennzeichnet, dass** die Halterung (12,13) der Vorrichtung (10) ein Stativ (12) ist.

## Claims

1. Device (10) for distance measurement, having a housing (24) and a transmitting unit (32) for a measurement signal (34, 36), which transmitting unit is accommodated in the housing (24), as well as a receiving unit (38) for the measurement signal returning from a target object (16, 18), having an evaluation unit (46) for determining a distance (d) between at least one reference point (14) of the housing (24) and the target object (16, 18) and a display device (50) which displays this distance (d), and having at least one receptacle (28) for a holder (12, 13) of the device (10), which receptacle is connected to the housing (24), **characterized in that** means (66, 84, 86), which detect an inserted holder (12, 13) and automatically transmit that reference point (14) of the distance measurement which is used during a measurement with the aid of the holder (12, 13) to the evaluation unit (46), are provided in or on the housing (24) of the device (10).

2. Device according to Claim 1, **characterized in that** the means (66, 84, 86) have a detector (66) and at least one switching means (84, 86).

3. Device according to Claim 2, **characterized in that** the at least one switching means (84, 86) and/or the detector (66) is/are a mechanical switch (86).

4. Device according to Claim 2, **characterized in that** the switching means (84, 86) and/or the detector (66) is/are an electrical contact.

5. Device according to Claim 2, **characterized in that** a capacitive detector is integrated in the device (10).

6. Device according to Claim 2, **characterized in that** the detector is a Hall sensor which detects a magnetic field.

7. Device according to one of the preceding claims, **characterized in that** the reference point (14) detected by the evaluation unit (46) is displayed in the display device (50) of the unit (20).

8. Device according to one of the preceding claims, **characterized in that** the measurement signal (36) for distance measurement is an optical signal, in particular a laser beam (34).

9. Device according to one of the preceding claims, **characterized in that** the holder (12, 13) of the device (10) is a stand (12).

## Revendications

1. Dispositif (10) de mesure de distance, qui présente
un boîtier (24) et une unité (32) qui émet un signal de mesure (34, 36) et qui est installée dans le boîtier (24),
une unité de réception (38) du signal de mesure renvoyé par un objet cible (16, 18),
une unité d'évaluation (46) qui détermine la distance (d) entre au moins un point de référence (14) du boîtier (24) et l'objet cible (16, 18),
un dispositif d'affichage (50) qui affiche cette distance (d) et
un logement (28) pour un support (12, 13) du dispositif (10),
le logement étant relié au boîtier (24),
**caractérisé en ce que**
des moyens (66, 84, 86) sont prévus dans ou sur le boîtier (24) du dispositif (10) pour détecter le support (12, 13) utilisé et transmettre automatiquement à l'unité d'évaluation (46) le point de référence (14) de la mesure de distance qui est utilisé pour la mesure à l'aide du support (12, 13).

2. Dispositif selon la revendication 1, **caractérisé en ce que** les moyens (66, 84, 86) présentent un détecteur (66) et au moins un moyen de commutation (84, 86).

3. Dispositif selon la revendication 2, **caractérisé en ce que** le ou les moyens de commutation (84, 86) et/ou le détecteur (66) sont un commutateur mécanique (86).

4. Dispositif selon la revendication 2, **caractérisé en ce que** le moyen de commutation (84, 86) et/ou le détecteur (66) sont un contact électrique.

5. Dispositif selon la revendication 2, **caractérisé en ce qu'**un détecteur capacitif est intégré dans le dispositif (10).

6. Dispositif selon la revendication 2, **caractérisé en ce que** le détecteur est un détecteur de Hall qui détecte un champ magnétique.

7. Dispositif selon l'une des revendications précédentes, **caractérisé en ce que** le point de référence (14) détecté par l'unité d'évaluation (46) est affiché sur le dispositif d'affichage (50) de l'appareil (20).

8. Dispositif selon l'une des revendications précédentes, **caractérisé en ce que** le signal de mesure (36) destiné à mesurer la distance est un signal optique et en particulier un faisceau laser (34).

9. Dispositif selon l'une des revendications précédentes, **caractérisé en ce que** le support (12, 13) du dispositif (10) est un statif (12).
